# EUROPEAN PATENT APPLICATION

(11) **EP 4 738 846 A1**
(43) Date of publication of application: **06.05.2026**
(21) Application number: 24860201.3
(22) Date of filing: 26.07.2024
(51) Int. Cl.: H04N 21/436, H04N 21/43, H04N 21/4363, H04N 21/41, H04N 21/44, H04N 21/439, H04N 21/81, G06N 3/02

(54) **DISPLAY DEVICE FOR IMMERSIVE SCREEN, AND CONTROL METHOD THEREFOR**

(30) Priority: 29.08.2023 KR 20230113988; 29.01.2024 KR 20240013427
(71) Applicant: Samsung Electronics Co., Ltd., Suwon-si, Gyeonggi-do 16677 (KR)
(72) Inventor: KANG, Kunsok, Suwon-si, Gyeonggi-do 16677 (KR); WANG, Davin, Suwon-si, Gyeonggi-do 16677 (KR); YU, Injae, Suwon-si, Gyeonggi-do 16677 (KR)
(74) Representative: Appleyard Lees IP LLP
(86) International application number: PCT/KR2024/010967
(87) International publication number: WO 2025/048280

(57) **Abstract**

A display device is disclosed. The display device comprises: a communication interface; a display; a memory for storing one or more instructions; and one or more processors, wherein the one or more processors execute the one or more instructions so as to control the display such that an image is displayed on the basis of content received from a source device, transmit first image data corresponding to the content to the external device through the communication interface when a network state for communication with an external device is a first state, and, when the network state is a second state, transmit feature information of the first image data and/or the second image data, which is converted on the basis of the first image data, to the external device through the communication interface.

## Description

### [Technical Field]

The disclosure relates to a display apparatus and a control method therefor, and more particularly to a display apparatus that is connected with a video output apparatus and capable of implementing an immersive screen and a control method therefor.

### [Background Art]

Recently, technology which allows for users to become more immersed in a video is increasing by outputting a lighting effect or an image corresponding to the video being displayed in a display apparatus at a periphery of the display apparatus by connecting the display apparatus with a lighting device or a projector.

However, in order for the projector to generate a graphic effect corresponding to a video content being streamed in real-time at an external area of the display apparatus, a process of receiving a large capacity image signal, analyzing the same in real-time, and identifying a graphic effect corresponding thereto may be necessary. Accordingly, in case a network state is not good (e.g., in case an available bandwidth is limited), it may become quite difficult to receive an original video signal in real-time and analyzing the same.

Accordingly, there has been a growing need for technology capable of monitoring the network state in real-time and changing a device which is the principal for analyzing the video signal according to necessity.

### [Disclosure]

### [Technical Solution]

According to at least one embodiment of the disclosure, a display apparatus includes a communication interface, a display, memory, and one or more processors, and the one or more processors, by executing the one or more instructions, cause the display apparatus to control the display to display a video based on content received from a source apparatus, transmit, based on a network state for communicating with an external apparatus being in a first state, first video data corresponding to the content to the external apparatus through the communication interface, and transmit, based on the network state being in a second state, at least one from among feature information of the first video data and second video data converted based on the first video data to the external apparatus through the communication interface.

According to at least one embodiment of the disclosure, a control method of a display apparatus includes displaying a video based on content received from a source apparatus, transmitting, based on a network state for communicating with an external apparatus being in a first state, first video data corresponding to the content to the external apparatus, and transmitting, based on the network state being in a second state, at least one from among feature information of the first video data and second video data converted based on the first video data to the external apparatus.

According to at least one embodiment of the disclosure, a non-transitory computer-readable recording medium that includes a program for executing a control method of a display apparatus, the control method of the display apparatus including displaying a video based on content received from a source apparatus, transmitting, based on a network state for communicating with an external apparatus being in a first state, first video data corresponding to the content to the external apparatus, and transmitting, based on the network state being in a second state, at least one from among feature information of the first video data and second video data converted based on the first video data to the external apparatus.

### [Description of Drawings]

FIG. 1 is a diagram illustrating operations of a display apparatus and a video output apparatus according to one or more embodiments of the disclosure;
FIG. 2 is a block diagram illustrating a configuration of a display apparatus according to one or more embodiments of the disclosure;
FIG. 3A and FIG. 3B are diagrams illustrating operations of a display apparatus and a video output apparatus according to one or more embodiments of the disclosure;
FIG. 4 and FIG. 5 are diagrams illustrating an operation of a display apparatus according to one or more embodiments of the disclosure;
FIG. 6 is a block diagram illustrating a configuration of a video output apparatus according to one or more embodiments of the disclosure;
FIG. 7 and FIG. 8 are diagrams illustrating a graphic image generating method of a video output apparatus according to one or more embodiments of the disclosure;
FIG. 9 and FIG. 10 are diagrams illustrating an image output method of a video output apparatus according to one or more embodiments of the disclosure; and
FIG. 11 is a flowchart illustrating a control method of a display apparatus according to one or more embodiments of the disclosure.

### [Mode for Invention]

Various modifications may be made to the embodiments of the disclosure, and there may be various types of embodiments. Accordingly, specific embodiments will be illustrated in drawings, and described in detail in the detailed description. However, it should be noted that the various embodiments are not for limiting the scope of the disclosure to a specific embodiment, but they should be interpreted to include all modifications, equivalents or alternatives of the embodiments included in the ideas and the technical scopes disclosed herein. With respect to the description of the drawings, like reference numerals may be used to indicate like elements.

In describing the disclosure, in case it is determined that the detailed description of related known technologies may unnecessarily confuse the gist of the disclosure, the detailed description thereof will be omitted.

Further, the embodiments below may be modified to various different forms, and it is to be understood that the scope of the technical spirit of the disclosure is not limited to the embodiments below. Rather, the embodiments are provided so that the disclosure will be thorough and complete, and to fully convey the technical spirit of the disclosure to those skilled in the art.

Terms used in the disclosure have been merely used to describe a specific embodiment, and is not intended to limit the scope of protection. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first", or "second" used in the disclosure may limit various elements regardless of order and/or importance, and may be used merely to distinguish one element from another element and not limit the relevant element.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

Conversely, when the certain element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...", "having the capacity to...", "designed to...", "adapted to...", "made to...", or "capable of..." based on circumstance. The term "configured to... (or set up to)" may not necessarily mean "specifically designed to" in terms of hardware.

Rather, in a certain circumstance, the expression "an apparatus configured to..." may mean something that the apparatus "may perform..." together with another apparatus or components. For example, a phrase "a processor configured to (or set up to) perform A, B, and C" may mean a dedicated processor (e.g., embedded processor) for performing a relevant operation, or a generic-purpose processor (e.g., central processing unit (CPU) or application processor) capable of performing the relevant operations by executing one or more software programs stored in a memory device.

The term 'module' or 'part' used in the embodiments herein perform at least one function or operation, and may be implemented with hardware or software, or implemented with a combination of hardware and software. In addition, a plurality of 'modules' or a plurality of 'parts', except for a 'module' or a 'part' which needs to be implemented with a specific hardware, may be integrated in at least one module and implemented as at least one processor.

Meanwhile, the various elements and areas in the drawings have been schematically illustrated. Accordingly, the technical spirit of the disclosure is not limited by relative sizes and distances illustrated in the accompanied drawings.

An embodiment of the disclosure will be described in detail below with reference to the accompanied drawings to aid in the understanding of those of ordinary skill in the art.

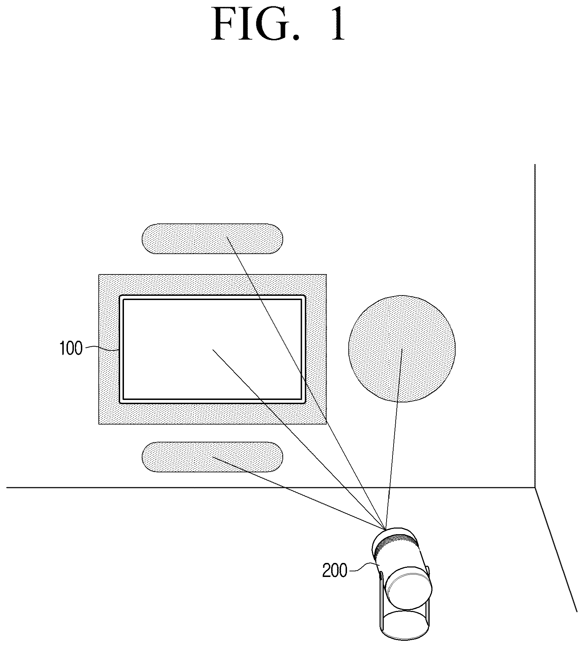

FIG. 1 is a diagram illustrating operations of a display apparatus and a video output apparatus according to one or more embodiments of the disclosure.

Referring to FIG. 1, a display apparatus 100 may be connected with a video output apparatus 200, and the video output apparatus 200 may output a graphic image at an external area of the display apparatus 100.

The display apparatus 100 may be an apparatus that displays a video based on content received from an external source apparatus. In FIG., 1 although the display apparatus 100 is displayed as a television (TV), this is merely one example, and may be implemented as an apparatus provided with a video display function such as a tablet personal computer (PC), a video wall, a large format display (LFD), a digital signage, and a digital information display (DID).

Here, the external source apparatus may transmit content with respect to the display apparatus 100, and the external source apparatus may be implemented as various apparatuses such as, for example, and without limitation, a PC, a laptop PC, a smartphone, a tablet PC, a set top box, a media player, a game device, and the like.

The video output apparatus 200 may output a graphic image corresponding to content received by the display apparatus 100 to an external area of the display apparatus 100. In FIG. 1, although the video output apparatus 200 is shown as a projector (or, projector display) that projects a graphic image, the embodiment is not limited thereto, and may be implemented as an apparatus provided with a function capable of outputting a video such as, for example, and without limitation, the TV, the video wall, the large format display (LFD), the digital signage, the digital information display (DID), and the like.

In addition, in FIG. 1, although the video output apparatus 200 has been shown as a small projector, this is merely one example, and the video output apparatus 200 may be implemented as a fixed-type, a mounting-type, or a moving-type projector. Here, the moving-type projector may be a projector having a moving-type member and may mean a projector which a user can move freely to a desired position.

In addition, the video output apparatus 200 may be positioned at a long distance from the display apparatus 100 as shown in FIG. 1, but this is merely one example, and may be attached as an integrated-type at a back surface of the display apparatus 100, or positioned on a table or a wall surface positioned in short distance from the display apparatus 100, or positioned in an accessory (e.g., speaker, etc.) of the display apparatus 100.

According to an embodiment of the disclosure, the display apparatus 100 and the video output apparatus 200 may provide an immersive screen to the user. Here, the immersive screen may mean an image displayed for the user to become more deeply immersed in content. For example, the immersive screen may include an image in which an image output to the display apparatus 100 and a graphic image output to an external area of the display apparatus 100 by the video output apparatus 200 are combined. The immersive screen may be substituted with terms such as a 'Multi-Screen', an 'Expanded Screen', a 'Comprehensive Screen', or an 'Integrated Screen', but will be collectively referred to as the immersive screen in the disclosure.

As shown in FIG. 1, the video output apparatus 200 may output a graphic image corresponding to a video signal by receiving the video signal from the display apparatus 100. At this time, the display apparatus 100 may determine whether to transmit a video signal and an audio signal as is with respect to the video output apparatus 200 by identifying a network state, or transmit a downscaled video signal and audio signal, or transmit only feature information of the video signal and audio signal. The display apparatus 100 according to the disclosure may identify the network state, and because a signal corresponding to the identified network state is transmitted to the video output apparatus 200, a graphic image corresponding to the content may be output in real-time by receiving only essential information for the video output apparatus 200 to output the graphic image even when the network state is not good (e.g., in case an available bandwidth of the network is limited).

An operation of the display apparatus 100 according to various embodiments of the disclosure will be described below.

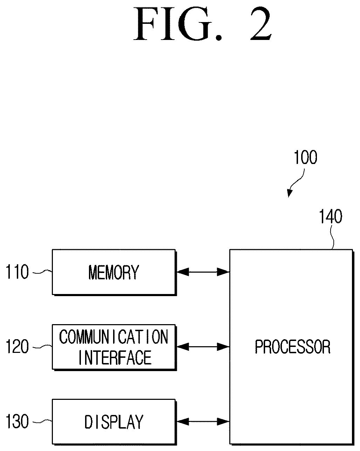

FIG. 2 is a block diagram illustrating a configuration of a display apparatus according to one or more embodiments of the disclosure.

Referring to FIG. 2, the display apparatus 100 may include memory 110, a communication interface 120, a display 130, and a processor 140.

The memory 110 may store various programs or data, instructions, and the like used in the display apparatus 100. In addition thereto, the memory 110 may store various information according to various embodiments of the disclosure.

According to an example of the disclosure, the memory 110 may be implemented as an internal memory such as, for example, and without limitation, a ROM (e.g., electrically erasable programmable read-only memory (EEPROM)), a RAM, and the like included in the one or more processors 140, or implemented as a separate memory from the one or more processors 140. In this case, the memory 110 may be implemented in a form of a memory embedded in the display apparatus 100 according to a data storage use, or implemented in a form of a memory attachable to or detachable from the display apparatus 100. For example, data for driving the display apparatus 100 may be stored in the memory embedded in the display apparatus 100, and data for an expansion function of the display apparatus 100 may be stored in the memory attachable to or detachable from the display apparatus 100.

Meanwhile, the memory embedded in the display apparatus 100 may be implemented as at least one of a volatile memory (e.g., dynamic RAM (DRAM), static RAM (SRAM), or synchronous dynamic RAM (SDRAM)), or a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), hard disk drive (HDD) or solid state drive (SSD)), and the memory attachable to or detachable from the display apparatus 100 may be implemented in a form such as, for example, and without limitation, a memory card (e.g., compact flash (CF), secure digital (SD), micro secure digital (micro-SD), mini secure digital (mini-SD), extreme digital (xD), multi-media card (MMC), etc.), an external memory (e.g., USB memory) connectable to a USB port, or the like.

The communication interface 120 may be a configuration for the display apparatus 100 to communicate with external apparatuses such as the external source apparatus, the video output apparatus 200, or the like.

The communication interface 120 may include at least one wireless communication module, at least one wired communication module, and the like. Each communication module may be implemented in at least one hardware chip form. The wireless communication module may include at least one module from among a Wi-Fi module, a Bluetooth module, an infrared communication module, or other communication modules. In addition thereto, the communication interface may include at least one communication chip that performs communication according to various wireless communication standards such as, for example, and without limitation, ZigBee, Ethernet, Universal Serial Bus (USB), Mobile Industry Processor Interface Camera Serial Interface (MIPI CSI), 3rd Generation (3G), 3rd Generation Partnership Project (3GPP), Long Term Evolution (LTE), LTE Advanced (LTE-A), 4th Generation (4G), 5th Generation (5G), and the like. The wired communication module may include at least one from among, for example, a local area network (LAN) module, an Ethernet module, a pair cable, a coaxial cable, an optical fiber cable, or an ultra wide-band (UWB) module. The communication interface may be implemented in various forms as described above, and may transmit and receive various signals by performing communication with external apparatuses.

The display 130 may mean a configuration for displaying various content.

The display 130 may be implemented as a display including self-emissive devices or a display including non-emissive devices and a backlight. For example, the display 130 may be implemented as displays of various types such as, for example, and without limitation, a liquid crystal display (LCD), an organic light emitting diode (OLED) display, a light emitting diode (LED), a micro LED, a mini LED, a plasma display panel (PDP), a quantum dot (QD) display, a quantum dot light-emitting diodes (QLED), or the like. In the display 130, a driving circuit, which may be implemented in a form of an a-si TFT, a low temperature poly silicon (LTPS) TFT, an organic TFT (OTFT), or the like, a backlight unit, and the like may be included together therewith. Meanwhile, the display 130 may be implemented as a touch screen coupled with a touch sensor, a flexible display, a rollable display, a three-dimensional display (3D display), a display physically coupled with a plurality of display modules, or the like.

The one or more processors 140 may control an overall operation of an electronic apparatus 100. Specifically, the one or more processors 140 may control the overall operation of the electronic apparatus 100 by being connected with each configuration of the electronic apparatus 100. For example, the one or more processors 140 may be operatively connected with the memory 110, the communication interface 120, and the display 130. The processor 140 may be configured with one or a plurality of processors.

The one or more processors 140 may perform, by executing at least one instruction stored in the memory 110, an operation of the electronic apparatus 100 according to the various embodiments.

The one or more processors 140 may include one or more from among a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 140 may control one or a random combination from among other elements of the electronic apparatus, and perform an operation associated with communication or data processing. The one or more processors 140 may execute one or more programs or instructions stored in the memory. For example, the one or more processors may perform, by executing the one or more instructions stored in the memory, a method according to one or more embodiments of the disclosure.

When a method according to one or more embodiments of the disclosure includes a plurality of operations, the plurality of operations may be performed by one processor, or performed by a plurality of processors. For example, when a first operation, a second operation, and a third operation are performed by a method according to one or more embodiments, the first operation, the second operation, and the third operation may all be performed by a first processor, or the first operation and the second operation may be performed by the first processor (e.g., a generic-purpose processor) and the third operation may be performed by a second processor (e.g., an artificial intelligence dedicated processor).

The one or more processors 140 may be implemented as a single core processor that includes one core, or implemented as one or more multicore processors that include a plurality of cores (e.g., a homogeneous multicore or a heterogeneous multicore). If the one or more processors 140 are implemented as the multicore processors, each of the plurality of cores included in the multicore processors may include a memory inside the processor such as a cache memory and an on-chip memory, and a common cache shared by the plurality of cores may be included in the multicore processors. In addition, each of the plurality of cores (or a portion from among the plurality of cores) included in the multicore processors may independently read and perform a program command for implementing a method according to one or more embodiments of the disclosure, or read and perform a program command for implementing a method according to one or more embodiments of the disclosure due to a whole (or a portion) of the plurality of cores being interconnected.

When a method according to one or more embodiments of the disclosure includes a plurality of operations, the plurality of operations may be performed by one core from among the plurality of cores or performed by the plurality of cores included in the multicore processors. For example, when a first operation, a second operation, and a third operation are performed by a method according to one or more embodiments, the first operation, the second operation, and the third operation may all be performed by a first core included in the multicore processors, or the first operation and the second operation may be performed by the first core included in the multicore processors and the third operation may be performed by a second core included in the multicore processors.

In the embodiments of the disclosure, the processor may refer to a system on chip (SoC), a single core processor, or a multicore processor in which the one or more processors and other electronic components are integrated, or a core included in the single core processor or the multicore processors, and the core herein may be implemented as the CPU, the GPU, the APU, the MIC, the DSP, the NPU, the hardware accelerator, the machine learning accelerator, or the like, but the embodiments of the disclosure are not limited thereto. For convenience of description below, the one or more processors 140 may be designated as a processor 140.

The processor 140 may control the display 130 to display a video based on content received from the external source apparatus. Here, the content received from the external source apparatus may include a video signal and an audio signal. The processor 140 may be connected with the external source apparatus through the communication interface 120, and may receive content through the communication interface 120.

For example, the processor 140 may be connected with the external source apparatus through a Bluetooth communication method using a Bluetooth module, and may receive the video signal and audio signal from the external source apparatus through a Bluetooth communication channel. A connection method through the Bluetooth communication method is merely one example, and the processor 140 may be connected with the external source apparatus through the above-described communication interface 120 of various types.

According to an example, the communication method with the external source apparatus and an external video output apparatus may be same or different, but for convenience of description below, communication with the external source apparatus and the external video output apparatus will be described as being performed through the communication interface 120.

According to an embodiment, the processor 140 may transmit, based on a network state connected through the communication interface 120 that performs communication with the external video output apparatus 200 (e.g., FIG. 1) being identified as in the first state, first video data corresponding to the received content to the video output apparatus through the communication interface 120.

Here, the "network state" may be determined based on the available bandwidth of the network, a packet loss rate, a round-trip time (RTT) of a packet, a delay-gradient of a packet, RSSI information, communication channel information, link speed information, channel interference information, retry rate information, or the like. In addition, the "network state" may include a "first state" and a "second state". The "first state" may mean that the network state is good allowing for the processor 140 to transmit a large capacity video signal or audio signal with respect to the video output apparatus 200. Conversely, the "second state" may mean that the network state is not good compared to the "first state" making it unsuitable to transmit the large capacity video signal or audio signal. For example, the processor 140 may identify, based on the available bandwidth of the network being greater than or equal to 30 Mbps, the network as in the "first state", and identify, based on the available bandwidth of the network being less than 30 Mbps, the network as in the "second state". In addition, the processor 140 may identify the network as in the "first state" in case the RTT of the packet is less than 30 ms, and identify the network as in the "second state" in case the RTT of the packet is greater than or equal to 30 ms.

In the above-described description, random numerical values of 30 Mbps and 30 ms have been provided as examples, but this is merely one example, and random values may be obtained according to requirements of the network.

In the above-described description, only the method of identifying the network state based on the available bandwidth of the network and the RTT of the packet has been described, but this is merely one example, and the network state may be identified based on various information such as, for example, and without limitation, the delay-gradient of the packet, the RSSI information, the communication channel information, the link speed information, the channel interference information, the retry rate information, or the like.

In an example, the "first video data" may mean a video signal received from the external source apparatus by the processor 140. For example, "the processor 140 transmitting first video data to the video output apparatus 200" may mean that the processor 140 is maintaining the detailed matters and quality of the video signal received from the external source apparatus as is and providing to the video output apparatus 200. The "first video data" may be substituted with the term "first video signal", and the like and may be substituted by various terms of same/similar concept.

In an example, the "second video data" may mean video data which the processor 140 converted based on the first video data. For example, the second video data may mean a video signal which the processor 140 performed downscaling on the video signal received from the external source apparatus. Alternatively, the "second video data" may include a video signal generated by converting to a relatively low resolution or low quality in order to reduce data capacity of an original video signal received from the external source apparatus.

For example, "the processor 140 transmitting second video data to the video output apparatus 200" may mean that the processor 140 is transmitting the quality of the video signal received from the external source apparatus to a relatively low quality rather than maintaining as is. The "second video data" may be substituted with the term "second video signal", and the like and may be substituted by various terms of the same/similar concept.

According to an embodiment, the processor 140 may transmit, based on the network state connected through the communication interface 120 that performs communication with the video output apparatus 200 being identified as in the second sate, at least one from among feature information of the first video data and the second video data to the video output apparatus 200 through the communication interface 120. For example, the processor 140 may transmit, based on the network state being identified as in the second state, only the feature information of the first video data to the video output apparatus 200, or transmit only the second video data to the video output apparatus 200, or transmit both the feature information of the first video data and the second video data to the video output apparatus 200.

Here, the "feature information of the first video data" may mean information which the processor 140 generated by extracting features by each scene based on the first video data. For example, a scene may be a plurality of video frames sections corresponding to the same space in a scenario distinguished by a content producer of a movie, or the like. However, the above is not limited thereto, and even if the above is the plurality of video frames sections corresponding to the same space, the above may be distinguished into difference scenes according to brightness, color, and the like of a video.

For example, the "feature information of the first video data" may include feature information corresponding to each of a plurality of scenes included in the first video data. Specifically, the feature information of the first video data may include various information such as, for example, and without limitation, color information of each of the plurality of scenes, main object information, contrast information, brightness information, edge information, texture information, and the like.

According to an example, the processor 140 may perform an image analysis for each of the plurality of video frames that constitute 'scene A' in order to extract feature information from 'scene A'.

For example, the processor 140 may identify, in order to perform image analysis on a first frame from among the plurality of video frames, pixel values (e.g., grayscale value) of pixels included in the first frame, and identify a representative pixel value of a relevant frame based on the identified pixel values. For example, the representative pixel value may be an average value of the pixels, the pixel value with the largest portion, and the like, and determined as the main pixel value of a relevant frame.

For example, the processor 140 may identify an object by detecting edges from the first frame. For example, the processor 140 may detect an edge portion by connecting pixels with pixels values of similar range that continue consecutively, and identify, based on an area surrounded with edges being identified, the object expressed by the edges based on a shape of the edges.

According to an example, the processor 140 may obtain information about the main color and information about the main object constituting 'scene A' by the above-described method. The above-described scene analysis method of the processor 140 is merely one example, and the processor 140 may extract feature information according to various analysis methods with respect to the video signal by extracting feature information of the video signal using various artificial intelligence models and the like. For example, the processor 140 may identify an object included in a frame based on at least one from among object recognition, object detection, object tracking, or image segmentation. For example, the processor 140 may detect objects by using techniques such as semantic segmentation which classifies and extracts objects included in the frame according to necessary, instance segmentation which recognizes objects by classifying the same by object even if it is an object of a same type, bounding box of a quadrangle form which includes the detected object when detecting the object included in a video, and the like.

According to an embodiment, the processor 140 may transmit, based on an available bandwidth of the network of the communication interface 120 that performs communication with the video output apparatus 200 being identified as greater than or equal to a pre-set value, a first video signal to the video output apparatus 200 through the communication interface 120.

According to an embodiment, the processor 140 may transmit, based on the available bandwidth of the network being identified as less than the pre-set value, at least one from among feature information of the first video data and the second video data to the video output apparatus 200 through the communication interface 120.

Here, the "pre-set value" may mean a value of the available bandwidth necessary for transmitting the first video data to the video output apparatus 200 without delay. The pre-set value may have different values according to a type of the first video data. For example, if the first video data is a video of 4K UHD resolution, 25 Mbps may be the pre-set value, and if the same is a video of 1080P (HD) resolution, 5 Mbps may be the pre-set value. In addition, the pre-set value may be set to various values according to a specification recommended by the first video data such as a greater value being set as the pre-set value as the greater a bit transmission rate or a frame rate required by the first video data is.

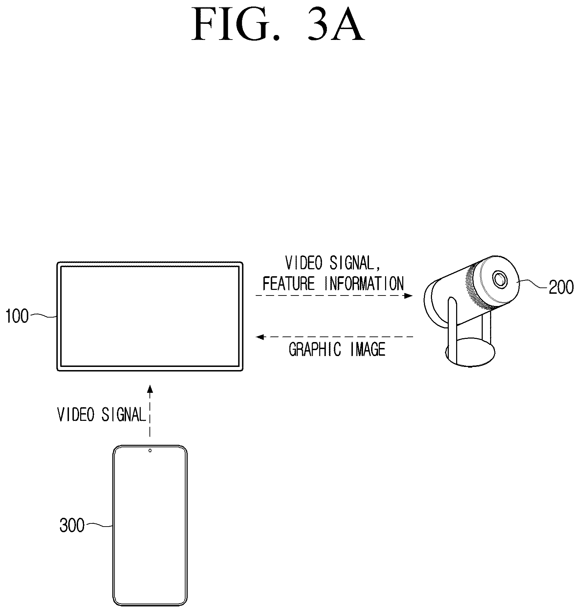

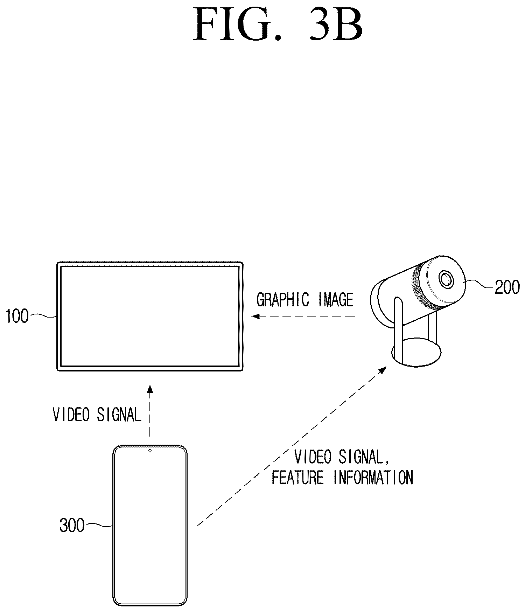

According to an embodiment, the processor 140 may obtain state information of the network by directly monitoring the network state to identify whether the available bandwidth of the network of the communication interface 120 is greater than or equal to the pre-set value and or obtain state information of the network from the external source apparatus. Description about a method of identifying the network state will be described in detail in the description of FIG. 3 which will be described below.

FIG. 3A and FIG. 3B are diagrams illustrating operations of a display apparatus and a video output apparatus according to one or more embodiments of the disclosure.

Referring to FIG. 3A and FIG. 3B, the display apparatus 100 or an external source apparatus 300 may obtain state information of the network by monitoring the network state, and the display apparatus 100, the video output apparatus 200, and the external source apparatus 300 may change the apparatus transmitting and receiving video signals and/or audio signals according to the network state.

Here, the "state information of the network" may include at least one from among the available bandwidth of the network, the packet loss rate, the Round-Trip Time of the packet, Delay-Gradient of the packet, the received signal strength indicator (RSSI) information, the communication channel information, the link speed information, the channel interference information, or the retry rate information. In other words, the network state information may be information associated with various networks that is influenced according to congestion, distance, and a transmission rate of the network.

According to an example, the display apparatus 100, the video output apparatus 200, and the external source apparatus 300 may all be connected through the same communication method (e.g., Wi-Fi communication method). The external source apparatus 300 may transmit video signals and audio signals to the display apparatus 100 through a Wi-Fi network, and the processor 140 may also transmit video signals and audio signals to the video output apparatus 200 through the Wi-Fi network. The processor 140 may monitor a Wi-Fi network state by transmitting and receiving video signals and audio signals. For example, the processor 140 may obtain state information of the network such as, for example, and without limitation the available bandwidth of the Wi-Fi network, the packet loss rate, the Round-Trip Time of the packet, the Delay-Gradient of the packet, the received signal strength indicator (RSSI), and the like. Likewise, the external source apparatus 300 may also monitor the Wi-Fi network and transmit the state information of the network as described above to the display apparatus 100.

According to an example, the display apparatus 100, the video output apparatus 200, and the external source apparatus 300 may be connected through different communication methods from one another. For example, the external source apparatus 300 and the display apparatus 100 may transmit and receive video signals by being connected through the Bluetooth communication method, and the display apparatus 100 and the video output apparatus 200 may transmit and receive video signals by being connected through a Wi-Fi communication method. In this case, while the display apparatus 100 may be connected with the video output apparatus through the Wi-Fi network and the processor 140 may obtain the state information of the network by monitoring the Wi-Fi network, the external source apparatus 300 may not directly monitor the Wi-Fi network because the external source apparatus 300 is connected through a Bluetooth network. Accordingly, the processor 140 may obtain the state information of the network by only performing direct monitoring of the network state.

Based on the above-described method, the processor 140 may identify whether the network state is in the first state or the second state based on the state information of the network obtained by the processor 140 directly monitoring the network state or the state information of the network obtained from the external source apparatus 300.

As shown in FIG. 3A, the external source apparatus 300 may transmit video signals to the display apparatus 100 through a network configured with the display apparatus 100 (e.g., Wi-Fi network), and the display apparatus 100 may transmit video signals or feature information of the video signals to the video output apparatus 200 through a network configured with the video output apparatus 200. Based on the above-described method, the display apparatus 100 may identify a state of the network configured with the video output apparatus 200, and if the identified network state is in the first state, the display apparatus 100 may transmit a control signal for outputting a first graphic image based on the first video data at an external area of display apparatus 100 to the video output apparatus 200. In addition, the display apparatus 100 may transmit, based on the identified network state being in the second state, a control signal for outputting a second graphic image based on at least one from among the feature information of the first video data and the second video data at an external area of the display apparatus 100 to the video output apparatus 200. However, even if the control signal is not transmitted to the video output apparatus 200 according to circumstance, an event in which at least one from among the first video data, the feature information of the first video signal, and the second video data is transmitted to the video output apparatus 200 may substitute the function of the control signal.

As shown in FIG. 3B, the external source apparatus 300 may configure a network with each of the display apparatus 100 and the video output apparatus 200. According to an example, it may be difficult to transmit video signals or feature information because the available bandwidth of the network configured with the video output apparatus 200 by the display apparatus 100 is quite limited. In this case, the external source apparatus 300 may configure a network with the video output apparatus 200 directly, and transmit the video signals or feature information to the video output apparatus 200 through the network. Through the above-described method, the external source apparatus 300 may identify the network state, and if the state of the network configured between the external source apparatus 300 and video output apparatus 200 is in the first state, the external source apparatus 300 may transmit, to the video output apparatus 200, a control signal for outputting the first graphic image based on the first video data to the video output apparatus 200. In addition, the external source apparatus 300 may transmit, based on the identified network state being in the second state, a control signal for outputting the second graphic image based on at least one from among feature information of the first video data and the second video data at an external area of the display apparatus 100 to the video output apparatus 200. However, in certain cases, even if the control signal is not transmitted to the video output apparatus 200, the event in which at least one from among the first video data, the feature information of the first video signal, and the second video data is transmitted to the video output apparatus 200 may substitute the function of the control signal.

In the above-described description, although only the Wi-Fi network and the Bluetooth network are provided as examples, the above is merely one example, and the display apparatus 100, the video output apparatus 200, and the external source apparatus 300 may be connected through a network configured according to various communication methods such as ZigBee, 3G, 3GPP, LTE, LTE-A, 4G, and 5G.

In the above described description, although it has been described that the display apparatus 100 or the external source apparatus 300 may identify the network state, and perform an operation corresponding to the identified network state, the embodiment is not limited thereto, and the display apparatus 100, the video output apparatus 200, and the external source apparatus 300 may analyze performances of each of the apparatuses and each of the apparatuses may perform an operation corresponding to the performances of each of the apparatuses. For example, an occupancy of a CPU embedded in each apparatus may be analyzed, and the apparatus with the lowest CPU occupancy may be controlled to extract feature information from the video signal. Specifically, if the CPU occupancy of the display apparatus 100 is 70%, the CPU occupancy of the video output apparatus 200 is 20%, and the CPU occupancy of the external source apparatus 300 is 50%, the video output apparatus 200 may be controlled to extract feature information from the received video signal.

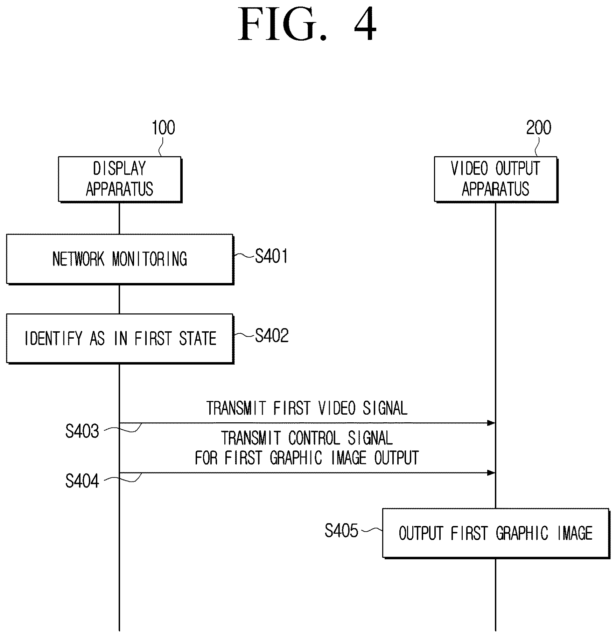

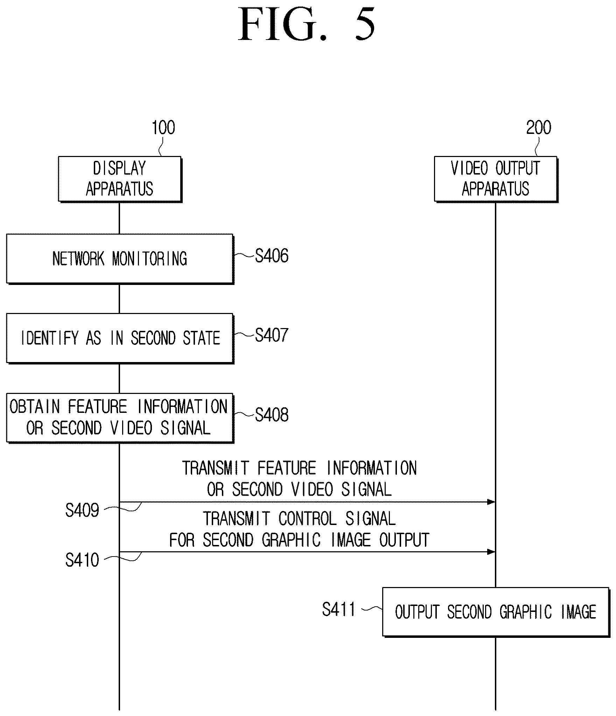

Because the "first graphic image" and the "second graphic image" may mean images output to an external area of the display apparatus 100 for the video output apparatus 200 to provide an immersive screen effect to the user, the above will be described in detail in FIG. 4 and FIG. 5 which will be described below.

FIG. 4 and FIG. 5 are diagrams illustrating an operation of a display apparatus according to one or more embodiments of the disclosure.

Referring to FIG. 4, in operation 401, the display apparatus 100 may perform network monitoring in order to identify the network state of the communication interface 120 that performs communication with the video output apparatus 200. For example, the display apparatus 100 may perform monitoring of the network state by obtaining state information of the network such as the available bandwidth of the network configured for communication with the video output apparatus 200, the packet loss rate of the network, the Round-Trip Time of the packet, and the like.

The display apparatus 100 may transit, based on the network state being identified as in the first state in operation 402, the first video data to the video output apparatus 200 in operation 403. For example, the display apparatus 100 may identify the network state as in the first state based on the available bandwidth of the network being greater than or equal to the pre-set value.

In operation 403, the display apparatus 100 may transmit information corresponding to a first graphic image output based on the first video data at an external area of the display 130 to the video output apparatus 200. Here, the "information corresponding to the first graphic image output" may mean a signal transmitted to an external apparatus such as the video output apparatus 200 to output the first graphic image at an external area of the display 130. For example, the "information corresponding to the first graphic image output" may include a control signal to output the first graphic image at an external area of the display 130.

The video output apparatus 200 may output, based on the first video data and the control signal being received in operation 404, the first graphic image at an external area of the display apparatus 100 in operation 405. However, in certain cases, the control signal may be included in the first video data and transmitted to the video output apparatus 200, or not transmitted to the video output apparatus 200. For example, the video output apparatus 200 may output the first graphic image at an external area of the display apparatus 100 based on an event in which the first video data is received.

Here, the "first graphic image" may mean a graphic image generated by the video output apparatus 200 based on the first video data. In an embodiment, the first graphic image may include a graphic image generated by an artificial intelligence model trained to receive feature information of the video signal and output a graphic effect (e.g., blur effect) and/or a graphic object (e.g., water droplet) corresponding to the feature information. In another embodiment, the first graphic image may include a graphic image generated by an artificial intelligence model trained to receive both the video signal and the feature information of the video signal and to output the video signal and the graphic effect and/or graphic object corresponding to the video signal and the feature information.

For example, an external area of the display apparatus 100 may include at least one from among a peripheral area, an upper area, a lower area, a left area, or a right area of the display apparatus 100. Here, the peripheral area of the display apparatus 100 may mean, referring back to FIG. 1, an area that surrounds the external area of a bezel provided in the display apparatus 100 and formed in a same form as the display apparatus 100.

According to an example, the first graphic image and/or the second graphic image may be displayed at an external area of the display 130 that is provided in the display apparatus 100. In this case, a processor 240 may generate a projection video in a size (or resolution) enlarged than the size of the display 130. For example, the processor 240 may perform an alpha blending process with respect to an area corresponding to the display 130, and generate a projection video by including the first graphic image and/or the second graphic image at the remaining area. Here, alpha blending may mean a method of displaying by allocating a new value of alpha (A) to a color value RGB and mixing a background RGB value and an RGB value on top thereof in order to create an effect that is as if transparent when another image is overlaid over an image.

For example, an Alpha value may be distinguished as a value between 0 and 255 or a value between 0.01 and 1.0, in which 0 being completely transparent, and 255 which is the opposite thereof (or 1.0 or the like being the highest value) being fully opaque. Alternatively, 0 may mean fully opaque, and 255 which is the opposite thereof (or 1.0 or the like being the highest value) may mean completely transparent. For example, if an 8-bit is allocated to the Alpha value and a value ranging from 0 to 255 may be represented, the greater the relevant value is, a ratio of relevant pixel may become higher and the lower the relevant value is, the ratio may become lower. For example, based on transparency of an area corresponding to the display 130 being increased, the video displayed in the display 130 that is provided at a rear end is maintained and the first graphic image and/or the second graphic image may be provided only at an external area of the display 130.

According to still another embodiment, the first graphic image and/or the second graphic image may be displayed at both an area of the display 130 that is provided in the display apparatus 100 and an external area of the display 130. In this case, the processor 240 may provide the first graphic image and/or the second graphic image included with the graphic effect (e.g., blur effect) and/or the graphic object (e.g., water droplet) corresponding to the content being displayed in the display 130. At this time, the processor 240 may output the first graphic image and/or second graphic image at an area that includes an area of the display 130 and an area that surrounds the external area of the bezel by a certain thickness, and overlay the first graphic image and/or the second graphic image with an image of a content that is being displayed in the display 130. Because the first graphic image and/or the second graphic image is overlaid with the image of the content being displayed in the display 130, the user may enjoy content with a greater sense of immersion than when the first graphic image and/or the second graphic image is provided only at the external area of the display 130.

Referring to FIG. 5, in operation 406, the display apparatus 100 may perform network monitoring in order to identify the network state of the communication interface that performs communication with the video output apparatus 200.

The display apparatus 100 may obtain, based on the network state being identified as in the second state in operation 407, the feature information from the first video data or obtain the second video signal in operation 408. For example, the display apparatus 100 may identify, based on the available bandwidth of the network being less than the pre-set value, the network state as in the second state.

As described in FIG. 2, the feature information may mean feature information corresponding to each of the plurality of scenes included in the first video data, and the second video data may mean a video signal generated by downscaling the first video data to a low resolution or a low quality.

The display apparatus 100 may transmit at least one from among feature information obtained from the first video data and the second video data to the video output apparatus 200 in operation 409, and transmit information corresponding to a second graphic image output based on at least one from among the feature information and the second video data in operation 410. Here, the "information corresponding to the second graphic image output based on at least one from among the feature information and the second video data" may mean a signal transmitted to an external apparatus such as the video output apparatus 200 in order to output the second graphic image at an external area of the display 130. For example, the "information corresponding to the second graphic image output based on at least one from among the feature information and the second video data" may include a control signal to output the second graphic image at an external area of the display 130.

In operation 411, the video output apparatus 200 may output the second graphic image at an external area of the display apparatus 100.

Here, the "second graphic image" may mean a graphic image generated by the video output apparatus 200 based on at least one from among the feature information and the second graphic image. According to an embodiment, the second graphic image may include a graphic image generated by an artificial intelligence model trained to receive feature information of the video signal and output the graphic effect (e.g., blur effect) and/or the graphic object (e.g., water droplet) corresponding to the feature information. In still another embodiment, the second graphic image may include a graphic image generated by the artificial intelligence model trained to receive both the downscaled video signal and the feature information of the video signal and output the downscaled video signal and the graphic effect and/or graphic object corresponding to the feature information.

In the above-described description, both the first graphic image and the second graphic image have been described as being generated by the trained artificial intelligence model, but this is merely one example, and the graphic effect and/or graphic object corresponding to the video signal or the feature information of the video signal may be generated by a pre-defined filter. Here, the pre-defined filter may define and store characteristics of the display apparatus 100, a watching mode selected by the user, and graphic effects suitable to a type of content in advance before the video signal or the feature information is received by the video output apparatus 200. For example, if the type of content is a 'soccer game', the pre-defined filter may generate a resizing effect to output the received video as a video that is enlarged in size in order to implement the immersive screen such that it is as if viewing soccer from an actual soccer stadium. In addition, the pre-defined filter may detect the size of the display apparatus 100 and generate various graphic effects such as generating a blur effect at a periphery of the display, generating the graphic object such as the water droplet, or the like.

In addition, in the above-described description, the processor 140 has been described as transmitting only the video signal, the feature information, or the control signal to the video output apparatus 200, but the processor 140 may output, by synchronizing time information of the display apparatus 100 and the video output apparatus 200 and sharing the same time standard, a video and audio corresponding to each other at the same timing may be output. For example, the processor 140 may synchronize each video frame and audio frame with the output of the video output apparatus 200 and transmit a packet including a timestamp for outputting together therewith, or the video output apparatus 200 may transmit a packet including the timestamp to the display apparatus 100. For example, a timestamp may be included in one area of each of the video frame and audio frame and transmitted.

For example, the display apparatus 100 may become a network time protocol (NTP) server apparatus, and the video output apparatus 200 may become a NTP client apparatus. The display apparatus 100 may be connected with a top-level NTP server that provides very precise time information. The display apparatus 100 may exchange a request packet and a reply packet with one another in order to synchronize with the video output apparatus 200. Specifically, the video output apparatus 200 may transmit the request packet including a reference timestamp, an origin timestamp, a receive timestamp, and the like to the display apparatus 100, and the display apparatus 100 may transmit, in response thereto, the reply packet including the above-described timestamp to the video output apparatus 200. The video output apparatus 200 may perform synchronization with the display apparatus 100 based on the reply packet received from the display apparatus 100, time taken until the packet was received, and the like.

The synchronization method between the two apparatuses that used NTP described above is merely one example, and time information of the display apparatus 100 and the video output apparatus 200 may be synchronized through various methods such as, for example, and without limitation, a synchronization method between the two apparatuses that use a precision time protocol (PTP), a method for obtaining time information by receiving a GPS signal through a GPS receiver, and the like.

In addition, although FIG. 4 and FIG. 5 merely show that the processor 140 is capable of transmitting the first video data or the second video data, the processor 140 may transmit the first audio data or the second audio data to the video output apparatus 200.

Specifically, referring back to FIG. 4, the display apparatus 100 may transmit, based on the network state being identified as in the first state, the first audio data to the video output apparatus 200. Here, the "first audio data" may mean an audio signal received from the external source apparatus 300 by the processor 140. In other words, the "processor 140 transmitting first audio data to the video output apparatus 200" may mean that the processor 140 is maintaining the detailed matters and quality of the audio signal received from the external source apparatus 300 as is and providing to the video output apparatus 200. The "first video data" may be substituted with the term "first video signal", and the like and may be substituted by various terms of the same/similar concept.

In addition, referring back to FIG. 5, the display apparatus 100 may transmit, based on the network state being identified as in the second state, at least one from among the feature information of the first audio data and the second audio data to the video output apparatus 200.

Here, the "second audio data" may mean audio data that the processor 140 converted based on the first audio data. For example, the second audio data may mean an audio signal that downscaled the audio signal that the processor 140 received from the eternal source apparatus. In other words, the "second audio data" may include an audio signal generated by reducing the original audio signal received from the external source apparatus to a low sampling rate or low sound quality.

Accordingly, the "processor 140 transmitting second audio data to the video output apparatus 200" may mean that the processor 140 is not maintaining the detailed matters and quality of the video signal received from the external source apparatus as is and is reducing to an audio signal of low quality with only essential matters remaining and transmitting the same. The "second audio data" may be substituted with the term "second audio signal", and the like and may be substituted by various terms of the same/similar concept.

Here, the "feature information of the first audio data" may mean information that the processor 140 generated by extracting features by each scene based on the first audio data. Specifically, the feature information of the first audio data may include various information such as frequency, volume, bit, and the like of the audio signal that constitute each of the plurality of scenes.

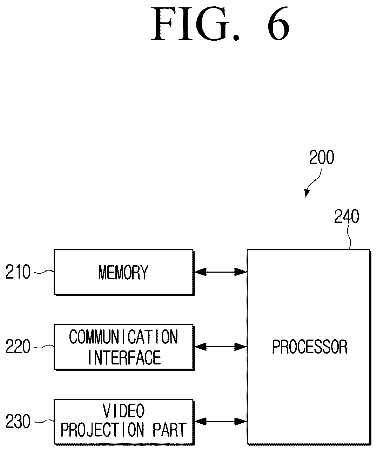

Because the video output apparatus 200 can output the first graphic image or the second graphic image based on the audio signal and the feature information of the audio signal, a detailed description thereof will be described in the descriptions of FIG. 6 to FIG. 9 which will be described below.

Meanwhile, in FIG. 4 and FIG. 5, although the order for all steps has been mapped for convenience of description, the order is not necessarily limited to the relevant order such as a step with no relevance to order or a step performable in parallel.

FIG. 6 is a block diagram illustrating a configuration of a video output apparatus according to one or more embodiments of the disclosure.

Referring to FIG. 6, the video output apparatus 200 may include memory 210, a communication interface 220, a video projection part 230, and the processor 240.

The memory 210 may store various programs or data, instructions and the like used in the video output apparatus 200. In addition thereto, the memory 210 may store various information and a pre-trained artificial intelligence model according to the various embodiments of the disclosure.

The communication interface 220 may be a configuration for communicating with other electronic apparatuses including the display apparatus 100. Because the detailed description of the communication interface 220 overlaps with the description of FIG. 2, redundant descriptions thereof will be omitted.

The video projection part 230 may perform a function of outputting an image onto a projection surface by projecting light for expressing a video to the outside. Here, the projection part may be a part of a physical space to which the image is output or a separate projection surface. The video projection part 230 may include various detailed configurations such as, for example, and without limitation, a light source of at least one from among a lamp, an LED, or a laser, a projection lens, a reflector, and the like.

The video projection part 230 may project a video with one from among the various projection methods (e.g., a cathode-ray tube (CRT) method, a liquid crystal display (LCD) method, a digital light processor (DLP) method, a laser method, etc.). The video projection part 230 may include at least one light source.

The video projection part 230 may output an image in a 4:3 aspect ratio, a 5:4 aspect ratio, or a 16:9 wide aspect ratio according to a user setting, or the like, and project an image in various resolutions such as, for example, and without limitation, a WVGA (854*480), a SVGA (800*600), a XGA (1024*768), a WXGA (1280*720), a WXGA (1280*800), a SXGA (1280*1024), an UXGA (1600*1200), a Full HD (1920*1080), or the like according to the aspect ratio.

The video projection part 230 may perform various functions for adjusting a projection image by control of the processor 240. For example, the video projection part 230 may perform a zoom function, a lens shift function, and the like.

The processor 240 may control an overall operation of the video output apparatus 200. Specifically, the processor 240 may be connected with the memory 210, the communication interface 220, and the video projection part 230, and control operations of the video output apparatus 200 overall by executing at least one instruction or program stored in the memory 210.

The various operations described as an operation of the video output apparatus 200 in the descriptions above may be performed through control of the processor 240.

For example, the operation of the video output apparatus 200 outputting the first graphic image at an external area of the display apparatus 100 may be performed with the processor 240 being the subject of the operation. Specifically, the processor 240 may control the video projection part 230 to output the first graphic image at an external area of the display apparatus 100.

The processor 240 may obtain, based on the first video data being received from the display apparatus 100 through the communication interface 220, first feature information of the first video data by analyzing the first video data, and obtain the first graphic image by inputting the obtained first feature information in the trained artificial intelligence model.

Alternatively, the processor 240 may obtain, based on at least one from among second feature information of the first video data and the second video data being received from the display apparatus 100 through the communication interface 220, the second graphic image by inputting at least one from among the second feature information or the second video data in the trained artificial intelligence model.

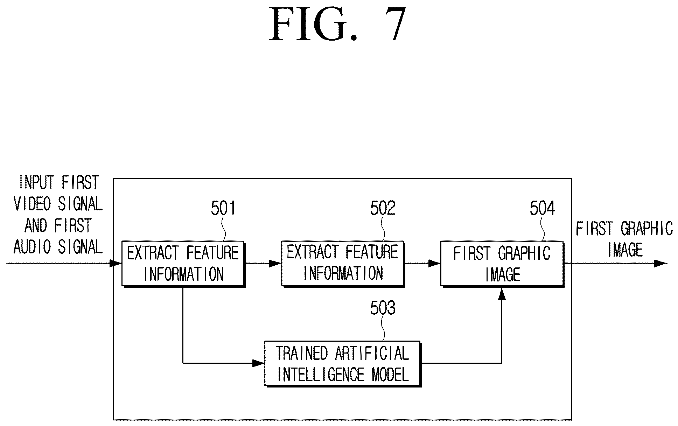

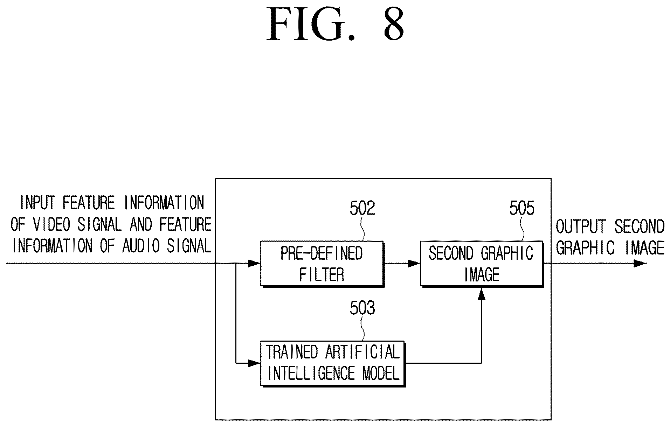

Here, the "first feature information of the first video data" may mean information that the processor 240 obtained by extracting feature information corresponding to each of a plurality of scenes included in a video based on the first video data. Alternatively, the "second feature information of the first video data" may mean feature information of the first video data that the display apparatus 100 transmitted to the processor 240 of the video output apparatus 200. In addition, a method for obtaining the first graphic image or the second graphic image using the trained artificial intelligence model will be described in detail in the description of FIG. 7 and FIG. 8 which will be described below.

FIG. 7 and FIG. 8 are diagrams illustrating a graphic image generating method of a video output apparatus according to one or more embodiments of the disclosure.

Referring to FIG. 7, the processor 240 may extract, based on first video data and/or first audio data being received from the display apparatus 100, the first feature information of the first video data and/or the first feature information of the first audio data by analyzing the first video data and/or first audio data 501. The "first feature information of the first video data" may include various information such as, for example, and without limitation, color information, main object information, contrast information and the like corresponding to each of a plurality of scenes that constitute the first video data, and the "first feature information of the first audio data" may include various information such as, for example, and without limitation, frequency, volume, bit, and the like of the first audio data.

Then, the processor 240 may obtain a first graphic image 504 by inputting the first feature information of the first video data and/or the first feature information of the first audio data in at least one from among a pre-defined filter 502 and a trained artificial intelligence model 503.

The trained artificial intelligence model 503 may mean an artificial intelligence model trained to receive feature information of a video and/or feature information of an audio and output at least one from among the graphic effect or the graphic object corresponding to the received data.

For example, if the content viewed by the user through the display apparatus 100 is a soccer game, the processor 240 may receive the video signal and audio signal with respect to the soccer game, and input feature information extracted from the received video signal and the audio signal in the trained artificial intelligence model 503.

The trained artificial intelligence model 503 may identify a main effect (e.g., goal scene) based on the extracted feature information. For example, the trained artificial intelligence model 503 may detect the word "goal" due to a voice volume of a presenter increasing suddenly or by recognizing a voice of the presenter based on volume information and frequency information from among the feature information of the audio signal, and detect that "a net of a goalpost" is swaying based on the feature information of the video signal, and identify a goal scene by detecting the changes described.

The trained artificial intelligence model 503 may identify, based on a main event being detected based on the feature information of the video signal and the audio signal, a graphic effect corresponding to the detected main event. For example, when the goal scene is detected, a graphic effect may be generated to output an image of spectators being passionate at an external area of the display apparatus 100, and when a scene of a gun being fired in a movie being detected, a graphic effect may be generated to output an image of a trace of blood that appear as if splattered in the surroundings at an external area of the display apparatus 100.

As described above, the artificial intelligence model that receives the first feature information of the first video data and/or the first feature information of the first audio data extracted by the processor 240 and generates a graphic effect corresponding thereto may be defined as a "trained first artificial intelligence model".

The processor 240 may generate a simple graphic effect by not only the trained first artificial intelligence model, but also by the pre-defined filter 502. However, because descriptions about the pre-defined filter 502 has already been described in the description portion of FIG. 4 and FIG. 5, redundant descriptions thereof will be omitted.

Referring to FIG. 8, the processor 240 may obtain, based on second feature information of the first video data and/or second feature information of the first audio data being received from the display apparatus 100, a second graphic image 505 by inputting the second feature information of the first video data and/or the second feature information of the first audio data in at least one from among the pre-defined filter 502 and the trained artificial intelligence model 503.

The "second feature information of the first video data" may mean feature information that the display apparatus 100 extracted based on the first video data, and include various information such as color information, main object information, contrast information, and the like corresponding to each of a plurality of scenes that constitute the first video data, and the "second feature information of the first audio data" may also mean feature information that the display apparatus 100 extracted based on the first audio data, and include various information such as, for example, and without limitation frequency, volume, bit, and the like of the first audio data.

As shown in FIG. 8, because the feature information extracted from the display apparatus 100 is received, the processor 240 may not have to extract the feature information.

The trained artificial intelligence model 503 may obtain the second graphic image 505 corresponding thereto based on the second feature information of the first video data and/or the second feature information of the first audio data. The artificial intelligence model that outputs the second graphic image 505 corresponding thereto by receiving the second feature information of the first video data and/or the second feature information of the first audio data as described above may be defined as a "trained second artificial intelligence model". Because a method for obtaining the second graphic image 505 by the trained second artificial intelligence model is same as the method for obtaining the first graphic image 504 by the trained first artificial intelligence model, a detailed description thereof will be omitted.

In addition, the processor 240 may obtain, based on the second video data and/or second audio data being received from the display apparatus 100, the second graphic image 505 by inputting the second video data and/or the second audio data in the trained artificial intelligence model 503.

The artificial intelligence model that receives the second video data and/or the second audio data and outputs the second graphic image 505 corresponding thereto may be defined as a "trained third artificial intelligence model".

While the first graphic image 504 may be an image generated by the artificial intelligence model based on the feature information extracted by the processor 240 from an original video signal and/or original audio signal, the second graphic image 505 may be an image generated by the artificial intelligence model based on feature information of a small capacity that the display apparatus 100 generated by extracting only necessary features from the original video signal and/or the original audio signal or the downscaled video signal and/or audio signal when the network state is in the second state (when not good). Accordingly, the first graphic image may provide a graphic effect that is more plentiful than the second graphic image, and provide the user with a more immersive screen experience.

In the description described above, the 'first, second, and third artificial intelligence model' have been defined respectively according to types of data that is input in the trained artificial intelligence model for convenience of description, but one artificial intelligence model may receive all video/audio signals, feature information of videos/audios, and downscaled video/audio signals.

The above-described artificial intelligence model (503) may be stored in the memory 210 of the video output apparatus 200, and an operation of the artificial intelligence model 503 may also be performed by an external server.

In the above-described description, embodiments of the processor 240 inputting the first video data, the second video data, and the feature information of the first video data in the artificial intelligence model have been described individually for convenience of description, but this is merely one example, and the processor 240 may perform an operation having combined the above-described embodiments such as inputting the second video data and the feature information of the first video data simultaneously in the artificial intelligence model.

The above-described artificial intelligence model 503 may be configured of a plurality of neural network layers. Each of the plurality of neural network layers may include a plurality of weight values, and perform a neural network operation through an operation between an operation result of a previous layer and the plurality of weight values. The plurality of weight values included in the plurality of neural network layers may be optimized by a learning result of the artificial intelligence model 503. For example, the plurality of weight values may be updated for a loss value or a cost value obtained by the artificial intelligence model 503 during the learning process to be reduced or minimized. An artificial neural network may include a Deep Neural Network (DNN), and examples thereof may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep-Q Networks, or the like, but is not limited to the above-described examples.

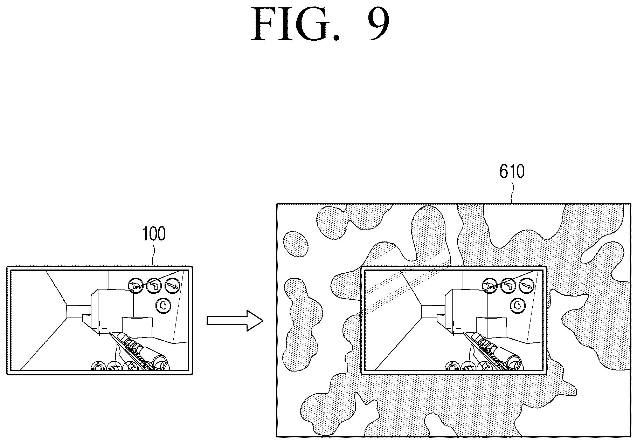

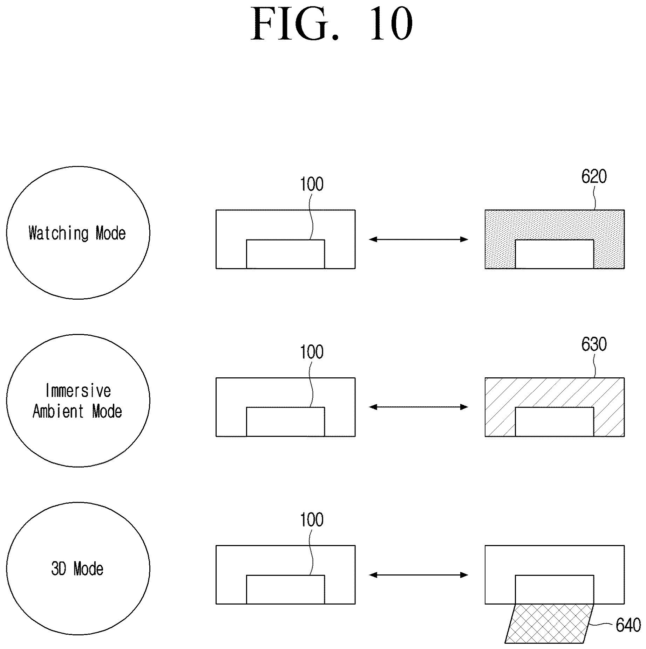

FIG. 9 and FIG. 10 are diagrams illustrating an image output method of a video output apparatus according to one or more embodiments of the disclosure.

Referring to FIG. 9, the processor 240 may output a graphic image 610 included with a graphic effect corresponding to the content being played back by the user at an external area of the display apparatus 100.

For example, as shown in FIG. 9, the processor 240 may identify the main event that is occurring in the content by analyzing the video and audio of the content. Specifically, the processor 240 that detect an occurrence of a main event such as a bullet being fired by identifying a movement of a main object such as a gun which is the main object being shook or bullet casings being identified in the surrounding of the gun, and the like in the video using the artificial intelligence model. Alternatively, the processor 240 may detect an occurrence of a main event such as a bullet having been fired based on analyzing the frequency and volume of the audio signal and detecting that an audio signal of a certain frequency is maintained until an audio signal of a difference frequency therefrom appears or an audio signal of a loud volume suddenly appears.

The processor 240 may control, based on an event that a bullet has been fired being detected, the video projection part 230 to output a graphic image 610 included with a graphic effect such as a trace of blood having been splattered at an external area of the display apparatus 100 for the user to become more immersed in the content.

FIG. 9 only shows of detecting the occurrence of the main event and that the graphic image 610 included in the graphic effect corresponding thereto being output, but this is merely one example, and a graphic image included with various graphic effects such as generating a lighting effect of a color corresponding to the content and the like may be output at an external area of the display apparatus 100 based on feature information of the content.

Referring to FIG. 10, the video output apparatus 200 may output different graphic images 620, 630, and 640 at different areas according to output mode information.

Here, the output mode information may mean information about a method for outputting an image by the processor 240 that is pre-stored in the video output apparatus 200. For example, the output mode information may include a watching mode, an immersive ambient mode, and a 3D mode. In addition, "output mode" may be substituted with the term "output state". Accordingly, the above-described watching mode, immersive ambient mode, and 3D mode may be substituted with terms such as a viewing state, an immersive ambient state, and a 3D state, respectively. For convenience of description, "output mode" may be used rather than the term "output state" in the disclosure.

The processor 240 may determine an output mode by receiving a user input, and determine the output mode corresponding thereto according to the received type of content.

In an embodiment, if a content for display by the display apparatus 100 is a movie content of a resolution having a 16:9 ratio, the processor 240 may determine the watching mode as the output mode based on information about it being a movie content. The processor 240 may input a video signal of the movie content and output mode information of it being the watching mode to the artificial intelligence model and obtain a graphic image 620 corresponding thereto. The graphic image 620 corresponding to the watching mode may be a graphic image in which an image of a resolution having a 21:9 ratio is displayed through the display apparatus 100 and an external area of the display apparatus 100 as shown in FIG. 10. However, this is merely one example, and the graphic image corresponding to the watching mode may not be limited to an image of a resolution having a specific ratio, and may include various images that provide a wider screen than the original image for the user to be able to enjoy the content more immersively.

In still another embodiment, if the content for display by the display apparatus 10 is a music content, the processor 240 may determine the immersive ambient mode as the output mode based on information about it being the music content. The processor 240 may input the video signal and the audio signal of the music content and the output mode information of it being the immersive ambient mode in the artificial intelligence model and obtain a graphic image 630 corresponding thereto. The graphic image 630 corresponding to the immersive ambient mode may be implemented by outputting a graphic effect corresponding to the features of the video signals or the audio signal at an external area of the display apparatus 100 as shown in FIG. 10.

In still another embodiment, if the content for display by the display apparatus 100 is a 3D game, the processor 240 may determine the 3D mode as the output mode based on information about it being a 3D game content. The processor 240 may input video signals and audio signals of the game content and output mode information about it being the 3D mode in the artificial intelligence model, and obtain a graphic image 640 corresponding thereto. The graphic image 640 corresponding to the 3D mode may be implemented by outputting a graphic effect corresponding to the features of the video signal and the audio signal of the game content on a floor surface in a front part of the display apparatus 100 as shown in FIG. 10.

In the descriptions of FIG. 1 to FIG. 10 described above, all the embodiments in which the display apparatus 100 and the video output apparatus 200 are in direct communication have been described only, but the display apparatus 100 and the video output apparatus 200 may be interconnected with an external server and perform the operations described in the description of FIG. 1 to FIG. 10 described above.

For example, the external server may provide video signals and audio signals to the display apparatus 100 and control to output the video and audio, while simultaneously the external server may provide the video signal and the audio signal to the video output apparatus 200 and control to output a graphic image corresponding thereto to toward the display apparatus 100.

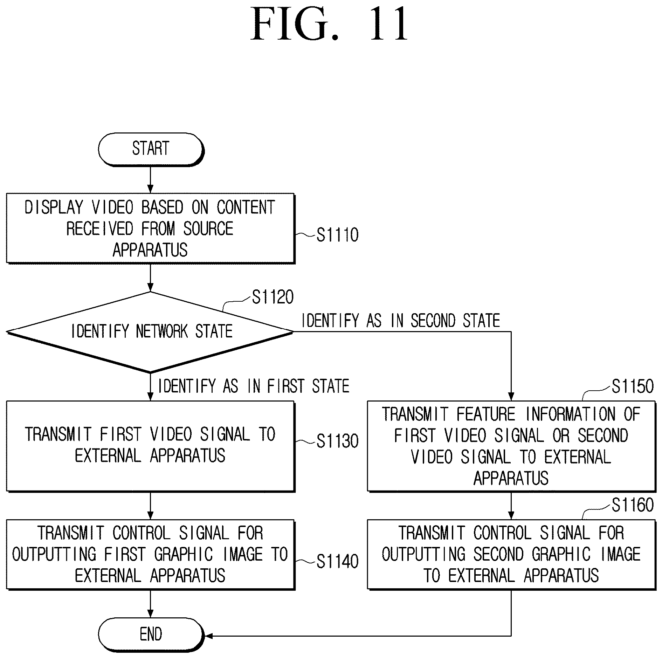

FIG. 11 is a flowchart illustrating a control method of a display apparatus according to one or more embodiments of the disclosure.

Referring to FIG. 11, in operation 1110, the display apparatus 100 may display a video based on content received from the external source apparatus.

In operation 1120, the display apparatus 100 may identify the network state. Here, the network state may mean a state of the network configured by the display apparatus 100 to perform communication with the video output apparatus 200. The network state may be determined based on the available bandwidth of the network, the packet loss rate, the round-trip time (RTT) of the packet, the delay-gradient of the packet, the RSSI information, the communication channel information, the link speed information, the channel interference information, the retry rate information, or the like.

In operation 1130, the display apparatus 100 may transmit, based on the network state being identified as in the first state, the first video data to the external video output apparatus. For example, the display apparatus 100 may transmit, based on the available bandwidth of the network being identified as greater than or equal to the pre-set value, the first video data to the external video output apparatus.

In operation 1140, the display apparatus 100 may transmit the control signal for outputting the first graphic image to the external video output apparatus 200. For example, the display apparatus 100 may transmit the control signal for outputting the first graphic image based on the first video data at an external area of the display apparatus 100.

In operation 1150, the display apparatus 100 may transmit, based on the network state being identified as in the second state, the feature information of the first video data or the second video data to the external video output apparatus 200. For example, the display apparatus 100 may transmit, based on the available bandwidth of the network being identified as less than the pre-set value, the feature information of the first video data or the second video data to the external video output apparatus 200.

In operation 1160, the display apparatus 100 may transmit the control signal for outputting the second graphic image to the external video output apparatus 200. For example, the display apparatus 100 may transmit the control signal for outputting the second graphic image based on at least one from among the feature information of the first video data and the second video data at an external area of the display apparatus 100.

The various methods described in FIG. 11 may be performed by the display apparatus having the configurations shown in FIG. 2, but is not necessarily limited thereto, and may be performed by a display apparatus having various configurations.

Meanwhile, in FIG. 11, although the order for all steps has been mapped for convenience of description, the order is not necessarily limited to the relevant order such as a step with no relevance to order or a step performable in parallel.

The various embodiments of the disclosure may be implemented by being applied to not only the display apparatus in each of the embodiments, but also to electronic apparatuses of all types that include a display function, and each of the embodiments may be combined as a whole or as a portion thereof and applied to one apparatus.

Meanwhile, the various embodiments described above may be implemented in a recordable medium which is readable by a computer or an apparatus similar to the computer using software, hardware, or the combination of software and hardware. In some cases, embodiments described herein may be implemented by the processor itself. According to a software implementation, embodiments such as the procedures and functions described herein may be implemented with separate software modules. Each of the software modules may perform one or more functions and operations described herein.

Meanwhile, the computer instructions for performing processing operations of the electronic apparatus 100 according to the various embodiments of the disclosure described above may be stored in a non-transitory computer-readable medium.

The computer instructions stored in this non-transitory computer-readable medium may cause a specific device to perform setting methods according to the above-described various embodiments when executed by the processor of the specific device.

The non-transitory computer-readable medium may refer to a medium that stores data semi-permanently rather than storing data for a very short time, such as a register, a cache, a memory, or the like, and is readable by a device. Specific examples of the non-transitory computer-readable medium may include, for example, and without limitation, a compact disc (CD), a digital versatile disc (DVD), a hard disc, a Blu-ray disc, a USB, a memory card, a ROM, and the like.

While the disclosure has been illustrated and described with reference to example embodiments thereof, it will be understood that the embodiments are intended to be illustrative, not limiting. It will be understood by those skilled in the art that various changes in form and details may be made therein without departing from the true spirit and full scope of the disclosure, including the appended claims and their equivalents.

## Claims

1. A display apparatus, comprising:
a communication interface;
a display;
memory storing one or more instructions; and
one or more processors,
wherein the one or more processors, by executing the one or more instructions, cause the display apparatus to:
control the display to display a video based on content received from a source apparatus,
control, based on a network state for communicating with an external apparatus being in a first state, first video data corresponding to the content to be transmitted to the external apparatus through the communication interface, and
control, based on the network state being in a second state, at least one from among feature information of the first video data and second video data converted based on the first video data to be transmitted to the external apparatus through the communication interface.

2. The display apparatus of claim 1,
wherein the one or more processors, by executing the one or more instructions, cause the display apparatus to:
control, based on an available bandwidth of the network being greater than or equal to a pre-set value, the first video data to be transmitted to the external apparatus through the communication interface, and
control, based on the available bandwidth of the network being less than the pre-set value, at least one from among feature information of the first video data and the second video data to be transmitted to the external apparatus through the communication interface.

3. The display apparatus of claim 1,
wherein the one or more processors, by executing the one or more instructions, cause the display apparatus to:
identify whether the network state is in the first state or the second state based on at least one from among network state information obtained from the display apparatus and network state information received from the source apparatus.

4. The display apparatus of claim 1,
wherein the one or more processors, by executing the one or more instructions, cause the display apparatus to:
obtain feature information corresponding to each scene comprised in the first video data and control so as to transmit to the external apparatus through the communication interface.

5. The display apparatus of claim 1,
wherein the one or more processors, by executing the one or more instructions, cause the display apparatus to:
control, based on the network state being in a first state, information corresponding to a first graphic image output based on the first video data at an external area of the display to be transmitted to the external apparatus through the communication interface, and
control, based on the network state being in a second state, information corresponding to a second graphic image output based on at least one from among feature information of the first video data and the second video data at an external area of the display to be transmitted to the external apparatus through the communication interface.

6. The display apparatus of claim 5,
wherein the first graphic image and the second graphic image are graphic images for providing an immersive screen effect for a video displayed on the display.

7. The display apparatus of claim 1,
wherein the one or more processors, by executing the one or more instructions, cause the display apparatus to:
control, based on the network state being in the first state, first audio data comprised in the content to be transmitted to the external apparatus through the communication interface, and
control, based on the network state being in a second state, at least one from among feature information of the first audio data and second audio data converted based on the first audio data to be transmitted to the external apparatus through the communication interface.

8. The display apparatus of claim 1,
wherein the one or more processors, by executing the one or more instructions, cause the display apparatus to:
control the first video data to be transmitted to the external device through the communication interface for the external apparatus to obtain and output a first graphic image from a first feature information obtained based on the first video data through an artificial intelligence model.

9. The display apparatus of claim 8,
wherein the one or more processors, by executing the one or more instructions, cause the display apparatus to:
control at least one from among second feature information of the first video data and second video data converted based on the first video data to be transmitted to the external apparatus through the communication interface for the external apparatus to obtain and output a second graphic image from at least one from among second feature information of the first video data and the second video data through the artificial intelligence model.

10. The display apparatus of claim 8,
wherein the one or more processors, by executing the one or more instructions, cause the display apparatus to:
control at least one from among the first video data, feature information of the first video data, and the second video data to be transmitted to the external apparatus through the communication interface for a graphic image corresponding to an output state of the external device to be obtained and output from the artificial intelligence model based on at least one from among the first video data, feature information of first video data, and second video data and an output state of the external apparatus, and
wherein an output state of the external apparatus comprises at least one from among a viewing state, an immersive ambient state, and a 3-dimensional (3D) state.

11. A control method of a display apparatus, the method comprising:
displaying a video based on content received from a source apparatus;
transmitting, based on a network state for communicating with an external apparatus being in a first state, first video data corresponding to the content to the external apparatus; and
transmitting, based on the network state being in a second state, at least one from among feature information of the first video data and second video data converted based on the first video data to the external apparatus.

12. The method of claim 11, comprising:
transmitting, based on an available bandwidth of the network being greater than or equal to a pre-set value, the first video data to the external apparatus; and
transmitting, based on the available bandwidth of the network being less than the pre-set value, at least one from among feature information of the first video data and the second video data to the external apparatus.

13. The method of claim 11, comprising:
identifying whether the network state is in the first state or the second state based on at least one from among network state information obtained from the display apparatus and network state information received from the source apparatus.

14. The method of claim 11, further comprising:
transmitting, based on the network state being in a first state, information corresponding to a first graphic image output based on the first video data at an external area of the display to be transmitted to the external apparatus; and
transmitting, based on the network state being in a second state, information corresponding to a second graphic image output based on at least one from among feature information of the first video data and the second video data at an external area of the display to be transmitted to the external apparatus.

15. A non-transitory computer-readable recording medium that stores computer instructions for a display apparatus to perform an operation when executed by a processor of the display apparatus, the operation comprising:
displaying a video based on content received from a source apparatus;
transmitting, based on a network state for communicating with an external apparatus being in a first state, first video data corresponding to the content to the external apparatus; and
transmitting, based on the network state being in a second state, at least one from among feature information of the first video data and second video data converted based on the first video data to the external apparatus.
